# EUROPEAN PATENT APPLICATION

(11) **EP 3 623 300 A1**
(43) Date of publication of application: **18.03.2020**
(21) Application number: 18812593.4
(22) Date of filing: 06.06.2018
(51) Int. Cl.: B65B 9/04

(54) **DEEP-DRAW PACKAGING MACHINE**

(30) Priority: 07.06.2017 JP 2017112941
(71) Applicant: Mechanize Inc., Mobara-shi, Chiba 2970074 (JP)
(72) Inventor: MOCHIZUKI, Masaru, Mobara-shi Chiba 297-0074 (JP)
(74) Representative: Prüfer & Partner mbB Patentanwälte · Rechtsanwälte
(86) International application number: PCT/JP2018/021660
(87) International publication number: WO 2018/225767

(57) **Abstract**

The purpose of the present invention is to dramatically improve the efficiency of deep-drawing packaging machines, which enable production of packaging containers from film without generating scraps, over that of conventional deep-drawing packaging machines. In order to achieve the purpose, a deep-drawing packaging machine is characterized by having: a temporary edge-bonding device for provisionally bonding, by means of heat-sealing, sections of the edges of a top film (3) and a bottom film (2) which are to become a part of a deep-drawn packaging container; temporary-bonded edge part clips (16a) for gripping the temporarily-bonded edge part (21) created by the temporary edge-bonding device; and a sealing device (4) for sandwiching the top film (3) and the bottom film (2) between an upper mold (4a) and a lower mold (4b) and causing adhesion by means of heat-sealing.

## Description

### [Technical Field]

The present invention relates to a deep-drawing packaging machine used for packaging, for example, food, and particularly relates to a deep-drawing packaging machine capable of manufacturing packaging containers without generating scraps from films and thereby capable of achieving reduction in film cost, industrial waste management cost and the amount of carbon dioxide discharged or the like.

### [Background Art]

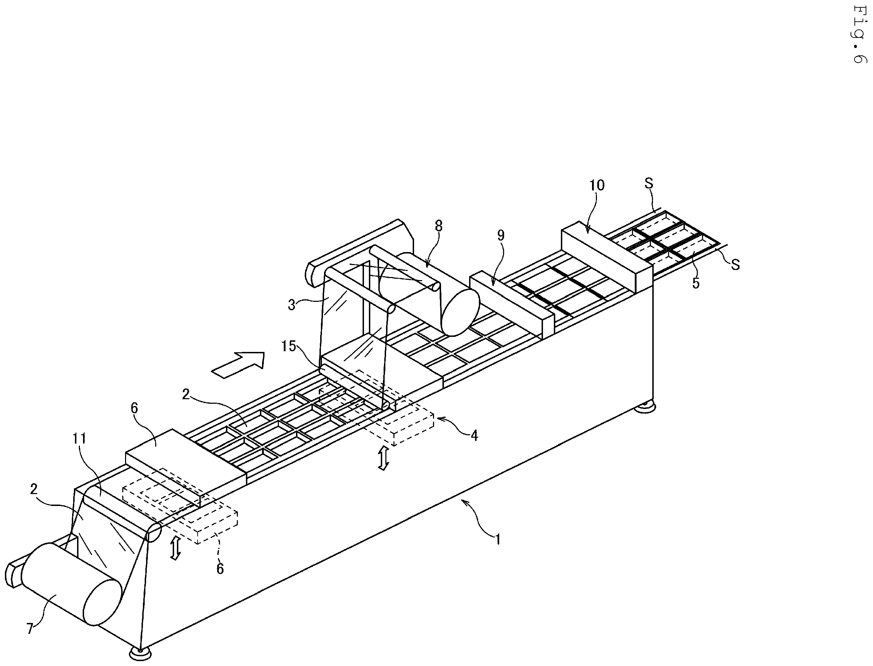

Conventionally, as a deep-drawing packaging machine used for packaging, for example, food, a deep-drawing packaging machine 1 as shown in FIG. 6 has been known. The deep-drawing packaging machine 1 is basically configured to manufacture containers 5, in which, for example, food ingredients are packaged, by placing, for example, the food ingredients (not shown) in a bottom film 2 molded in recessed shapes, then covering them with a top film 3, and sealing (hermetically closing) them by a sealing device 4.

Additionally, in FIG. 6, reference sign 6 represents a molding device for molding the bottom film 2 into recessed shapes by using molds, reference sign 7 represents an unprocessed roll of the bottom film 2, reference sign 8 represents an unprocessed roll of the top film 3, reference sign 9 represents a cross-cutter device which cuts the sealed bottom film 2 and top film 3 in the direction perpendicular to the direction in which they are carried, reference sign 10 represents a length cutter device which cuts the sealed bottom film 2 and top film 3 in parallel to the direction in which they are carried, reference sign 11 represents a bottom-film-use infeed roller for guiding the bottom film 2 to a molding device 6, and reference sign 15 represents a top-film-use infeed roller for guiding the top film 3 to the sealing device 4, respectively.

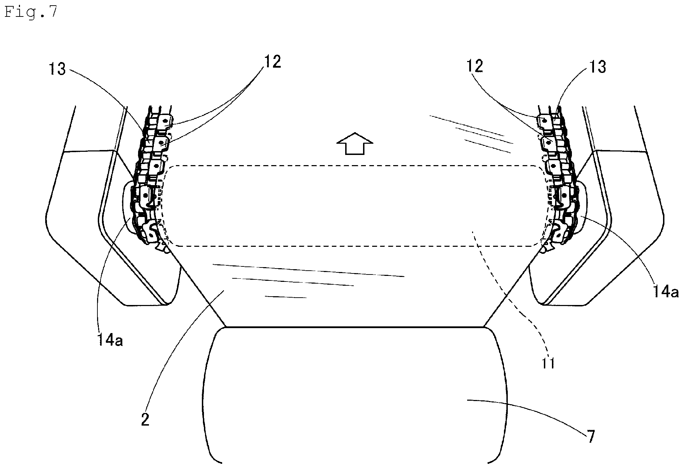

FIG. 7 shows, in an enlarged manner, the vicinity of the bottom-film-use infeed roller 11 of the deep-drawing packaging machine 1. As shown in the drawing, the deep-drawing packaging machine 1 has, as a carrying device which carries the bottom film 2, an endless chain 13, chain-fixing clips 12 which are fixed to the endless chain 13 and formed so as to clamp both-side edges of the bottom film 2, and sprockets 14a around which the endless chain 13 is suspended, and in this case, the sprockets 14a are configured to be rotated by a driving operation of a motor, not shown, so that the bottom film 2 is thus carried in the direction of an arrow in the drawing.

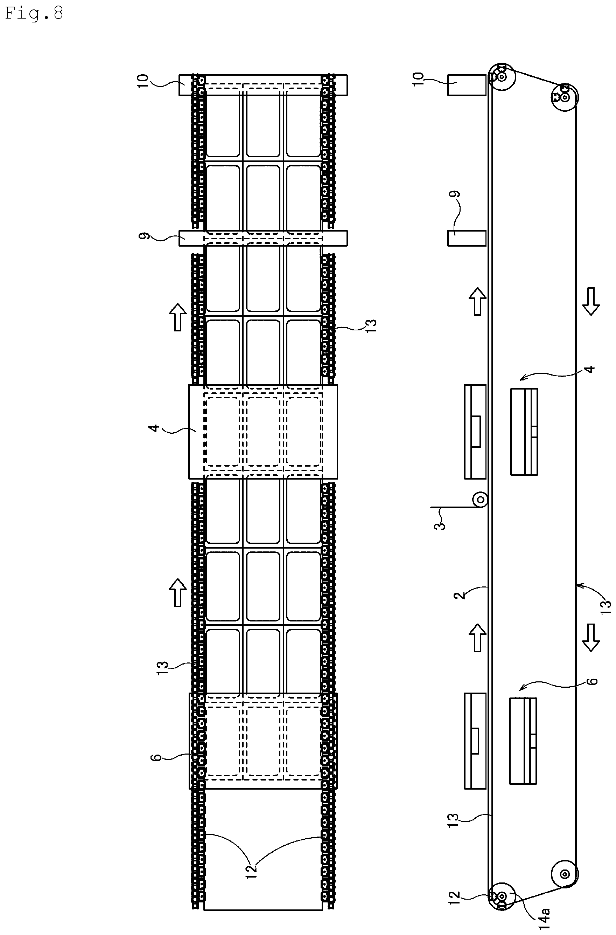

Moreover, the bottom film 2 whose both-side edges are clamped by the chain-fixing clips 12 is carried in the deep-drawing packaging machine 1 in accordance with the movement of the endless chain 13 shown by the arrow of FIG. 8. Furthermore, in the same manner as in the bottom film 2, the top film 3 is also configured to be carried, with its both-side edges being clamped by the chain-fixing clips 12.

Additionally, the chain-fixing clips 12 are configured to be temporarily opened at a position immediately before the sealing device 4 (position at which the bottom film 2 is covered with the top film 3), and after passing through the position, they are made to clamp the top film 3 together with the bottom film 2. Thus, the bottom film 2 and the top film 3 are carried in their overlapped state from a position after passing through the position immediately before the sealing device 4.

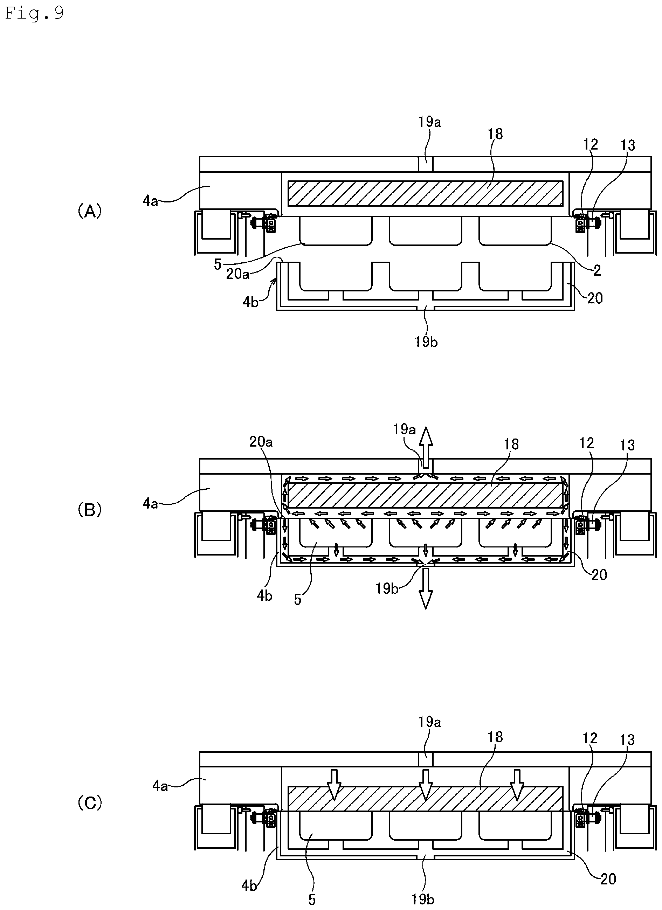

The sealing device 4 is configured to seal the bottom film 2 and the top film 3 in the steps shown in FIG. 9. As shown in the drawing, the sealing device 4 basically consists of an upper mold 4a, a lower mold 4b, and a sealing hot plate 18.

First, as shown in (A) of the drawing, the bottom film 2 and the top film 3 (hereinafter, referred to sometimes as "both of films 2, 3" in the present specification) clamped by the chain-fixing clips 12 are carried between the upper mold 4a and the lower mold 4b, which are opened to the upper and lower sides. Then, as shown in (B) of the drawing, the lower mold 4b is moved up, the upper mold 4a and the lower mold 4b are closed, and, at the same time with this, air is removed from ventilation holes 19a and 19b respectively provided on the upper and lower molds 4a and 4b to bring the interiors of the containers 5 into a vacuum state.

Then, as shown in (C) of the drawing, the sealing hot plate 18 is moved down, the bottom film 2 and the top film 3 are sealed by thermal welding, and sealing of the containers 5 is carried out. Then, as the sealing hot plate 18 is moved up, the lower mold 4b is moved down, and the upper mold 4a and the lower mold 4b are opened and are returned to the state of (A) of the drawing. These steps of (A) to (C) of FIG. 11 are repeated to carry out the sealing step by the sealing device 4.

In the step of (B) of the drawing, as shown by a plurality of small arrows, the air in the containers 5 is configured to be removed from the vicinities of the both sides of the bottom film 2 to the outside the containers 5 through ventilation pipes 20 provided in the lower mold 4b. Additionally, although the air inside the container 5 is not removed from the ventilation hole 19a of the upper mold 4a because of the presence of the top film 3, degassing is also carried out from the ventilation hole 19a so as to maintain the pressure balance on the periphery of the container 5.

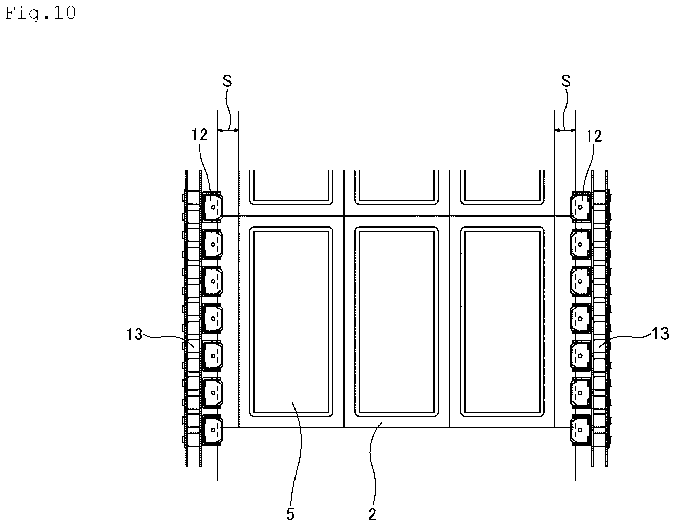

Incidentally, onto the bottom film 2 to be used in the past deep-drawing packaging machine 1, surplus portions, each having a predetermined width, as indicated by S in FIG. 10, are formed on its both-side edges. This configuration is formed so as to allow the chain-fixing clips 12 to clamp the bottom film 2 by using the surplus portions S; thus, upon sealing the bottom film 2, the upper mold 4a and the lower mold 4b can be closed without clamping the chain-fixing clips 12.

Moreover, since the surplus portions S are unnecessary for the container 5, they need to be removed before completion of the container 5, and are normally cut by the length cutter device 10 as scraps at the time of manufacturing. Furthermore, since these scraps have to be processed as wastes, there has been a problem that the processing takes labor, time, costs or the like.

Incidentally, with respect to this problem, the inventor of the present application has already devised an invention disclosed in Patent Literature 1, and completed a deep-drawing packaging machine capable of eliminating the surplus portions from the bottom film, and even after the completion of the invention, they have diligently studied about improvements of functions, efficiency and the like of the deep-drawing packaging machine so as to further improve the deep-drawing packaging machine. As a result, the inventors of the present application have found out that in a deep-drawing packaging machine, when the both-side edges of both of the films are temporary bonded after the surplus portions have been eliminated from the bottom film, prior to sealing both of the films by the sealing device, and by carrying the films, with the both-edge temporary bonded portion being clamped by clips, the efficiency of the deep-drawing packaging machine can be remarkably enhanced, and the present invention is accomplished.

### [Citation List]

### [Patent Literatures]

[Patent Literature 1] Japanese Patent No. 5458159

### [Summary of Invention]

### [Technical Problem]

The present invention relates to a deep-drawing packaging machine used for packaging, for example, food, and, particularly, its object is to provide a deep-drawing packaging machine capable of manufacturing packaging containers without generating scraps from films and thereby capable of achieving reduction in film cost, industrial waste management cost and the amount of carbon dioxide discharged. Moreover, another object is to provide a deep-drawing packaging machine having remarkably enhanced efficiency in comparison with the conventional one.

### [Solution to Problem]

As a means therefor, a deep-drawing packaging machine according to the present invention is characterized by including an edge-portion temporary bonding device for temporarily bonding portions corresponding to both-side edges of a top film and a bottom film that form portions of a container by thermal welding after a deep-drawing packaging process; both-edge temporary bonding portion-use clips for use in clamping both-edge temporary bonded portions formed by the corresponding edge-portion temporary bonding device; and a sealing device for sealing the top film and the bottom film by thermal welding, with those films being clamped by an upper mold and a lower mold.

Further, the deep-drawing packaging machine according to the present invention is characterized by including an edge-portion temporary bonding device for temporarily bonding portions corresponding to both of edges of a top film and a bottom film that form portions of a container by thermal welding after a deep-drawing packaging process; both-edge temporary bonding portion-use clips for use in clamping both-edge temporary bonded portions formed by the corresponding edge-portion temporary bonding device; non-both edge temporary bonding portion-use clips for use in clamping portions other than the above-mentioned both-edge temporary bonded portions of both of the edges of a top film and a bottom film; and a sealing device that clamps the top film and the bottom film by an upper mold and a lower mold so as to seal the films by thermal welding.

Moreover, the deep-drawing packaging machine according to the present invention is also characterized by a configuration in which in the above-mentioned sealing device, the upper mold and the lower mold are closed without being made in contact with the above-mentioned both-edge temporary bonding portion-use clips.

Furthermore, the deep-drawing packaging machine according to the present invention is also characterized in that the above-mentioned sealing device clamps the top film and the bottom film clamped by the above-mentioned both-edge temporary bonding portion-use clips, as they are, by an upper mold and a lower mold, and seals the films by thermal welding.

### [Advantageous Effects of Invention]

The present invention, which relates to a deep-drawing packaging machine used for packaging, for example, food, makes it possible to provide a deep-drawing packaging machine that is particularly capable of manufacturing packaging containers without generating scraps from films and thereby capable of achieving reduction in film cost, industrial waste management cost, the amount of carbon dioxide discharged or the like. Moreover, it becomes possible to provide a deep-drawing packaging machine having remarkably enhanced efficiency in comparison with the conventional one.

### [Brief Description of Drawings]

[FIG. 1] FIG. 1 is a schematic drawing showing one portion of a deep-drawing packaging machine according to an embodiment of the present invention, viewed from above.
[FIG. 2] FIG. 2 is a drawing showing a link mechanism of the deep-drawing packaging machine according to the embodiment of the present invention.
[FIG. 3] FIG. 3 is a schematic drawing showing one portion of a deep-drawing packaging machine according to another embodiment of the present invention, viewed from above.
[FIG. 4] FIG. 4 is a drawing showing an upper mold 4a and a lower mold 4b.
[FIG. 5] FIG. 5 is a drawing showing flows of air at the time when sealing is carried out by a sealing device.
[FIG. 6] FIG. 6 is a drawing showing a conventional deep-drawing packaging machine 1.
[FIG. 7] FIG. 7 is a drawing showing a carrying device possessed by the conventional deep-drawing packaging machine 1.
[FIG. 8] FIG. 8 is a drawing showing another conventional deep-drawing packaging machine 1.
[FIG. 9] FIG. 9 is a drawing showing a sealing device 4 of the conventional deep-drawing packaging machine 1.
[FIG. 10] FIG. 10 is a drawing showing a bottom film 2 in the conventional deep-drawing packaging machine 1.

### [Description of Embodiments]

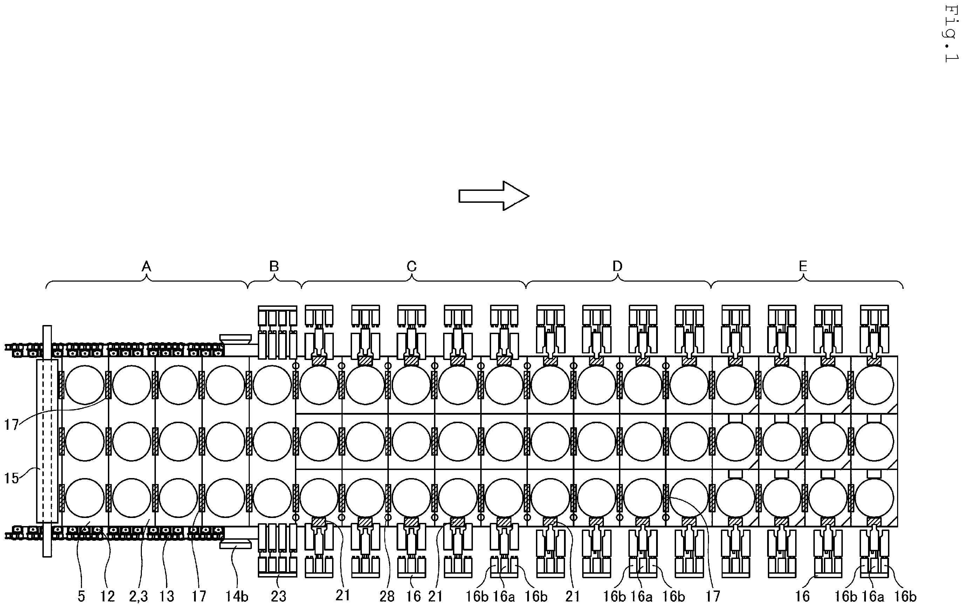

Hereinafter, modes for carrying out a deep-drawing packaging machine according to the present invention will be described. FIG. 1 is a schematic drawing showing one portion of the deep-drawing packaging machine according to the present invention viewed from above. Additionally, in the present embodiment, since explanation will be given on a deep-drawing packaging machine for packaging a food ingredient (round slice ham or the like) having a round shape, the container has a round shape. Moreover, in the following explanation, with respect to a basic configuration or the like that is the same as the conventional deep-drawing packaging machine 1 explained above, the same reference signs as those used in the aforementioned drawing, as they are, will be used.

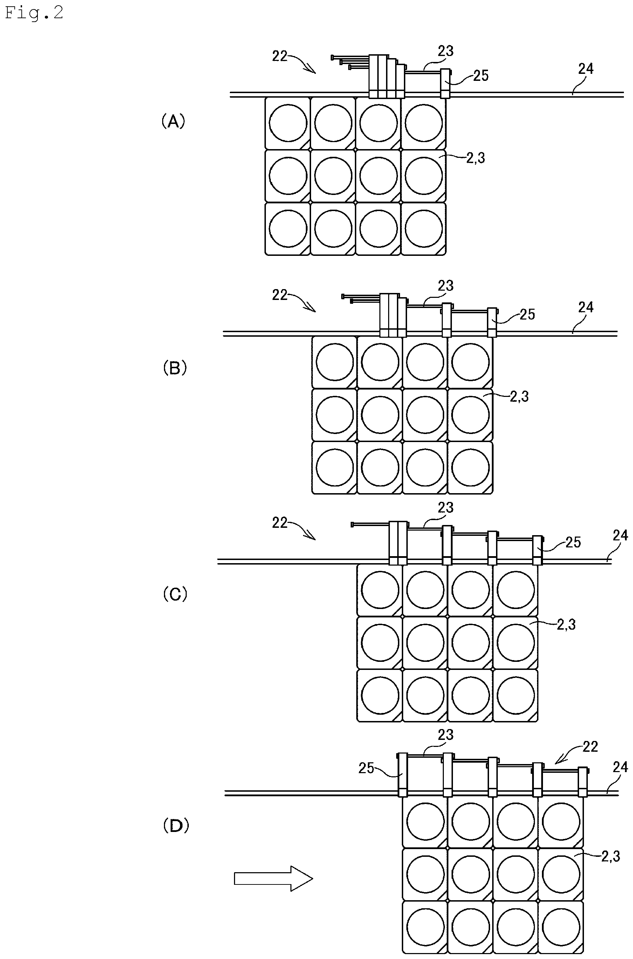

In FIG. 1, reference sign A represents an area to which both of films 2 and 3 are carried by chain-fixing clips 12, reference sign B represents an area to which both of the films 2 and 3 are carried by a link mechanism 22 (see FIG. 2), reference sign C represents an area in which both of the films 2 and 3 are temporary bonded, reference sign D represents an area through which both of the temporary bonded films 2 and 3 are carried to the sealing device, and reference sign E represents an area in which both of the films 2 and 3 are sealed by the sealing device. Additionally, in this case, both of the films 2 and 3 are carried from left to right in the drawing.

In the area A, the top film 3 to be supplied through a tip-film-use infeed roller 15 is clamped and carried by the chain-fixing clips 12 in an overlapped state with the bottom film 2. Moreover, the chain-fixing clips 12 are configured so as to be moved in accordance with an endless chain 13 and opened at the position of a sprocket 14b to supply both of the films 2 and 3 to the area B.

In the area A, both of the films 2 and 3 are thermally welded by a border portion temporary bonding device, not shown. Reference sign 17 represents a border temporary bonded portion between both of the films 2 and 3 temporarily bonded to each other. As shown by the drawing, the border temporary bonded portion 17 is formed at a border portion between mutually different containers 5 and 5 that are adjacent in the carrying direction of both of the films.

As shown in FIG. 2, a link mechanism 22 in the area B is configured so as to be slide-expanded. In FIG. 2, reference sign 23 represents a link bar, 24 represents a guide shaft, and 25 represents a clip with the link bar. In the area B, both of the films 2 and 3 are clamped by the clips 25 with the link bars, and carried in the right direction as shown in the order of (A)→ (B)→ (C)→(D) of FIG. 2. Moreover, after completion of the slide-expanding operations in the right direction, the clips 25 with the link bars release both of the films 2 and 3 so that all of these are allowed to move in the left direction. In this manner, the link mechanism 22 is configured to be slide-expanded and gathered.

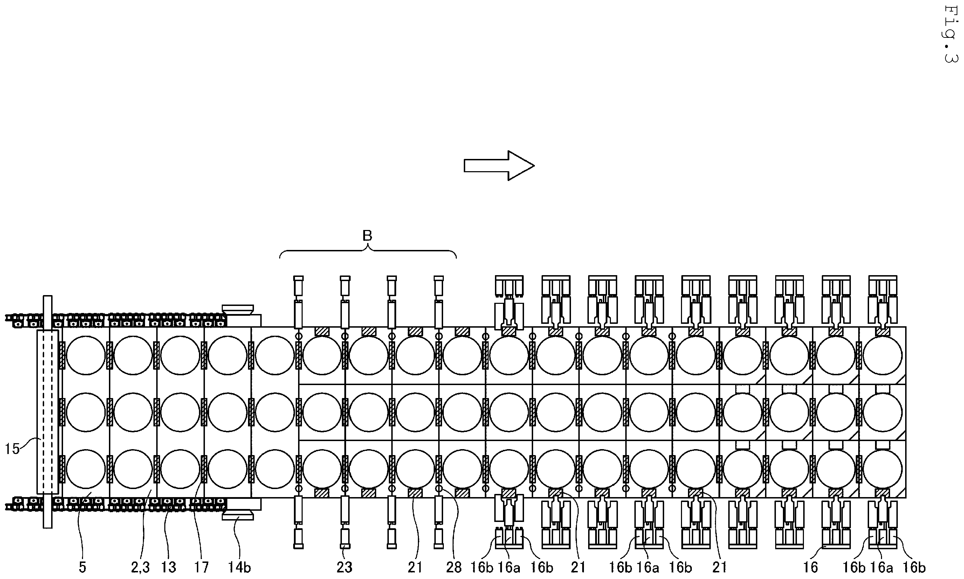

In the deep-drawing packaging machine according to the present embodiment, by repeatedly carrying out slide-expanding and gathering operations by using the link mechanism 22, both of the films 2 and 3 are carried quickly and intermittently. Additionally, of course, the movement of the endless chain 13 in the area A is also carried out in cooperation with the slide-expanding and gathering operations by the clips 25 with link bars. FIG. 3 also shows a state in the case when the link mechanism 22 is slide-expanded.

As shown in FIG. 1, in the area C, both of the films 2 and 3 are carried by a clip unit 16 constituted by three clips. The three clips constituting the clip unit 16 are arranged side by side in parallel with the carrying direction of both of the films 2 and 3, with a both edge temporary bonding portion-use clip 16a located in the center, and two non-both edge temporary bonding portion-use clips 16b are located on the two sides of the both edge temporary bonding portion-use clip 16a.

In the area C, both of the films 2 and 3 are thermally welded by an edge-portion temporary bonding device, not shown. In this case, reference sign 21 represents a both edge temporary bonded portion in both of the films 2 and 3 temporarily bonded to each other. As shown in the drawing, the both edge temporary bonded portion 21 is formed at portions corresponding to both-side edges of the top film 3 and the bottom film 2 that form one portion of the container 5 after a deep-drawing packaging process.

Moreover, in the case when both of the films 2 and 3 are temporarily bonded by the edge-portion temporary bonding device, in the area C, as shown in the drawing, the non-both edge temporary bonding portion-use clips 16b clamp both of the films 2 and 3, while the both edge temporary bonding portion-use clip 16a is made to stand by at a backward position apart from both of the films 2 and 3, without clamping both of the films 2 and 3. After the both edge temporary bonding process at the area C, both of the films 2 and 3 are carried to an area D by the clip unit 16 that is allowed to slide in the right direction in the drawing.

In the area D, as shown in FIG. 1, the both edge temporary bonding portion-use clip 16a clamps both of the films 2 and 3 in the both edge temporary bonding portion 21, while the non-both edge temporary bonding portion-use clips 16b are made to stand by at a backward position apart from both of the films 2 and 3, without clamping both of the films 2 and 3. In this manner, when either the both edge temporary bonding portion-use clip 16a or the non-both edge temporary bonding portion-use clips 16b clamps both of the films 2 and 3, the other ones are moved in cooperation therewith so as to stand by at a backward position apart from both of the films 2 and 3.

Thereafter, by the sliding clip unit 16, both of the films 2 and 3 are carried from the area D to the area E, and clamped by an upper mold and a lower mold in a sealing device so as to be thermally welded. After having been sealed in the area E, in the same manner as in the conventional deep-drawing packaging machine, the resulting films are cut orthogonally to the carrying direction by a cross cutter device, and are then cut in parallel with the carrying direction by a length cutter device. Thus, containers are manufactured by the deep-drawing packaging process.

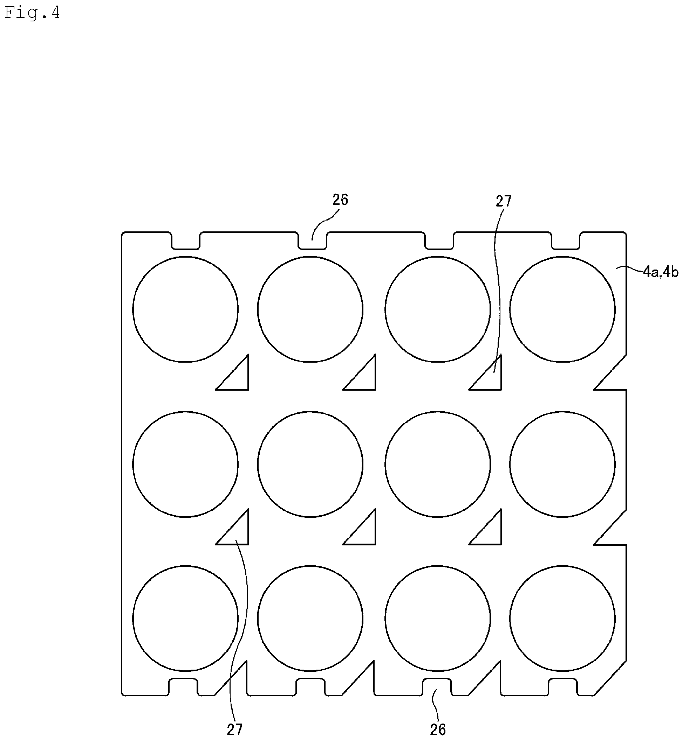

Additionally, as shown in FIG. 4, in the deep-drawing packaging machine according to the present embodiment, in the upper mold 4a and the lower mold 4b of the sealing device, cut-out portions 26 are respectively formed so as to close the upper mold 4a and the lower mold 4b so that the upper mold 4a and the lower mold 4b can be closed without being made in contact with the both edge temporary bonding portion-use clip 16a. In other words, the sealing device can clamp both of the films 2 and 3 clamped by the both edge temporary bonding portion-use clip 16a, as they are, by the upper mold 4a and the lower mold 4b, and seal the films by thermal welding.

Further, reference sign 27 of FIG. 4 shows a missing portion for use in preventing both of the films 2 and 3 from being thermally welded. This missing portion 27 corresponds to a place forming an easy opener that makes both of the thermally welded films 2 and 3 more easily peeled in a container 5 after completion.

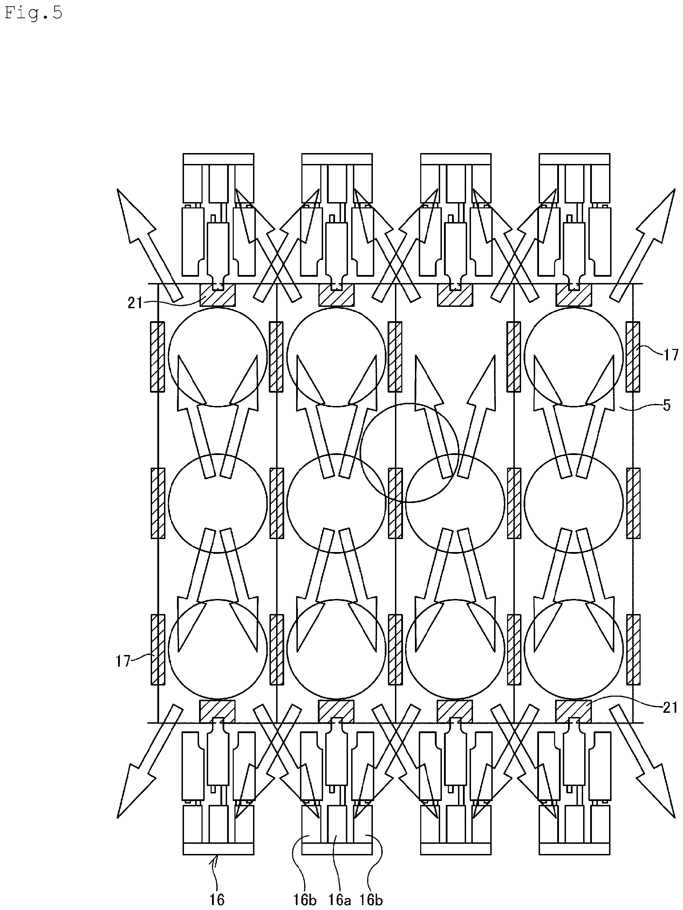

Moreover, in the deep-drawing packaging machine according to the present embodiment, as indicated by an arrow of FIG. 5, upon sealing by the sealing device, air inside the container 5 is removed to the outside of the container 5 from the vicinity of the both-side edges of both of the films 2 and 3 through a place that is not thermally welded, that is, a gap between the border temporary bonding portion 17 and the both edge temporary bonded portion 21.

Furthermore, in the deep-drawing packaging machine according to the present embodiment, in the area C and the area D, during a period in which the movements of both of the films 2 and 3 are momentarily stopped, both of the films may be fixed by pressing both of the films 2 and 3 from above and below, at a desired place in the vicinity of both-side edges of both of the films 2 and 3. By this arrangement, during the period in which the both edge temporary bonding portion-use clip 16a and the non-both edge temporary bonding portion-use clip 16b momentarily release both of the films 2 and 3, deviations in both of the films 2 and 3 can be completely eliminated. Reference sign 28 (position near the border temporary bonded portion 17) of FIG. 1 and FIG. 3 shows an example of a place at which both of the films 2 and 3 are pressed from above and below in this manner so as to be fixed.

Since the deep-drawing packaging machine according to the present embodiment has a structure as described above, it becomes possible to use a film that does not need the surplus portion S shown in FIG. 10 by using this structure, and consequently to manufacture deep-drawing packaging containers without causing scraps. Thus, reduction in industrial waste management cost and the amount of carbon dioxide discharged or the like can be achieved. Moreover, since both of the films are carried by using the link mechanism as shown in FIG. 2, the films can be carried more efficiently in comparison with the deep-drawing packaging machine that continuously carries both of the films, thereby making it possible to remarkably enhance the manufacturing capability of deep-drawing packaging containers.

### [Industrial Applicability]

As described above, in accordance with the present invention, it becomes possible to manufacture packaging containers without generating scraps from films and thereby to provide a deep-drawing packaging machine capable of achieving reduction in film cost, industrial waste management cost and the amount of carbon dioxide discharged or the like. Moreover, it also becomes possible to provide a deep-drawing packaging machine having remarkably enhanced efficiency in comparison with the conventional one.

### [Reference Signs List]

1: DEEP-DRAWING PACKAGING MACHINE
2: BOTTOM FILM
3: TOP FILM
4: SEALING DEVICE
5: CONTAINER
6: MOLDING DEVICE
7: UNPROCESSED ROLL OF BOTTOM FILM 2
8: UNPROCESSED ROLL OF TOP FILM 3
9: CROSS-CUTTER DEVICE
10: LENGTH-CUTTER DEVICE
11: BOTTOM FILM-USE INFEED ROLLER
12: CHAIN FIXING CLIP
13: ENDLESS CHAIN
14a, 14b: SPROCKET
15: TOP FILM-USE INFEED ROLLER
16: CLIP UNIT
16a: BOTH-EDGE TEMPORARY BONDING PORTION-USE CLIP
16b: NON-BOTH-EDGE TEMPORARY BONDING PORTION-USE CLIP
17: BORDER TEMPORARY BONDING PORTION
18: SEALING HOT PLATE
19a, 19b: VENTILATION HOLE
20: VENTILATION PIPE
21: BOTH-EDGE TEMPORARY BONDING PORTION
22: LINK MECHANISM
23: LINK BAR
24: GUIDE SHAFT
25: CLIP WITH LINK BAR
26: CUT-OUT PORTION
27: MISSING PORTION
28: EXAMPLE OF PLACE FOR PRESSING BOTH OF FILMS 2, 3 SO AS TO FIX THEM

## Claims

1. A deep-drawing packaging machine comprising: an edge-portion temporary bonding device for temporarily bonding portions corresponding to both-side edges of a top film and a bottom film that form portions of a container by thermal welding after a deep-drawing packaging process; both-edge temporary bonding portion-use clips for use in clamping both-edge temporary bonded portions formed by the corresponding edge-portion temporary bonding device; and a sealing device that clamps the top film and the bottom film by an upper mold and a lower mold so as to seal the films by thermal welding.

2. A deep-drawing packaging machine comprising: an edge-portion temporary bonding device for temporarily bonding portions corresponding to both-side edges of a top film and a bottom film that form portions of a container by thermal welding after a deep-drawing packaging process; both-edge temporary bonding portion-use clip for use in clamping both-edge temporary bonded portions formed by the edge-portion temporary bonding device; non-both-edge temporary bonding portion-use clips for use in clamping portions other than the both-edge temporary bonded portions of both-side edges of the top film and the bottom film; and a sealing device that clamps the top film and the bottom film by an upper mold and a lower mold so as to seal the films by thermal welding.

3. The deep-drawing packaging machine according to claim 1 or claim 2, wherein in the sealing device, the upper mold and the lower mold are closed without being made in contact with the both-edge temporary bonding portion-use clip.

4. The deep-drawing packaging machine according to claim 1 or claim 2, wherein the sealing device clamps the top film and the bottom film clamped by the both-edge temporary bonding portion-use clips, as they are, by the upper mold and the lower mold, and seals the films by thermal welding.
